Europäisches Patentamt

European Patent Office

Office européen des brevets

(11) Publication number: **0 216 569**
A2

(12) **EUROPEAN PATENT APPLICATION**

(21) Application number: **86306974.6**

(22) Date of filing: **10.09.86**

(51) Int. Cl.⁴: **B 01 J 8/14**
//C10G1/06, C10J3/48

(30) Priority: **18.09.85 GB 8523018**

(43) Date of publication of application:
**01.04.87 Bulletin 87/14**

(84) Designated Contracting States:
**BE DE FR IT NL SE**

(71) Applicant: **British Gas plc**
**Rivermill House 152 Grosvenor Road**
**London SW1V 3JL(GB)**

(72) Inventor: **Lee, Anthony**
**12 Morestead Avenue**
**Sheldon Birmingham(GB)**

(72) Inventor: **Wild, Keith Robert**
**18 Mayama Road Fazeley**
**Tamworth Staffordshire(GB)**

(72) Inventor: **Peel, Roderick Lewis**
**Stelfox House 142 Widney Lane**
**Solihull B91 3LH(GB)**

(54) **Gas solid phase reactions and apparatus therefor.**

(57) Gas-solid phase reactions can be effected in apparatus comprising a reaction chamber arranged and adapted to define an endless, preferably substantially horizontal path, at least a portion of which is circular. The apparatus also includes inlet means for introducing reactants into the chamber, the inlet being preferably located such that the reactants entering the chamber follow a path which is tangential to the circularly moving reactants within the chamber.

FIG.1.

Apparatus & Method for Performing Gas-Solid Phase Reactions

This invention relates to apparatus and method for carrying out chemical reactions, particularly gas-solid phase reactions such as the thermal hydrogenation of carbonaceous materials eg. coal particles and coal chars to produce synthesis for fuel gases.

In our European Patent Publication No. 0095237, we disclose a method for hydrogenating carbonaceous materials wherein said fuel and a gas comprising hydrogen are continuously introduced into a thermally insulated reaction chamber so constructed as to define an endless path along which reactants and reaction products can circulate within the chamber and said fuel and said gas comprising hydrogen are admixed and introduced in the form of at least one jet through orifice means into the reaction chamber to cause a substantial amount of an admixture of reactants and reaction products to circulate continuously around the said endless path characterised in that said fuel is solid particulate carbonaceous material transported in a stream of a hydrogen containing gas whose temperature is not greater than 200°C and wherein a portion of the reaction products is continuously withdrawn from the chamber, sufficient remaining in the chamber to permit adequate recirculation to support reaction of the fuel particles and produce a reaction product whose temperature is not less than 700°C.

In the above Publication it is mentioned that apparatus for carrying out the reaction may be that as described in UK Patent Specifications Nos. 1031717 and 1074932. This apparatus essentially comprises two co-axially arranged cylinders, the inner one being of shorter internal length than the outer. This arrangement defines a reaction chamber divided into two zones or regions, the volume defined by the inner chamber or cylinder being a riser zone whilst that of the outer annular region is a downcomer zone. Thus reactants enter the riser and travel through an endless path by crossing above the inner wall and descending through the outer annular downcomer.

Such apparatus was originally conceived for the thermal hydrogenation of liquid carbonaceous feedstocks such as non-distillate oils, and is known as a Gas Recycle Hydrogenator (GRH). The adaptation and development of the GRH reactor for the hydrogenation of solid carbonaceous feedstocks arose out of the necessity to provide long residence times coupled with the rapid heating and mixing conditions obtained with entrained-flow regimes. The improvement that this GRH based design confers over other coal hydrogenation processes is fully discussed in our aforementioned European Patent Publication No. 0095237. However, whilst the GRH type of reactor encourages gas recirculation this is not necessarily true for solids recirculation. Attempts to increase the entrained flow velocity or recirculation rate have a tendency to increase solids carry over with the product gas with the comcommitant need to provide gas-solids separators downstream.

The present invention therefore proposes means for carrying out such gas-solids phase hydrogenation reactions under entrained flow

0216569

conditions whilst maintaining sufficient residence time to allow the reaction to come to equilibrium and allowing minimum solids carry over.

In accordance with the present invention there is provided apparatus for carrying out gas-solid phase reactions including a rection chamber arranged and adapted to define an endless path along which reactants may move and at least a portion of which path is circular (as hereinafter defined), means for introducing at least one gaseous reactant and at least one solid, particulate reactant into said chamber and off-take means for removing reaction products from said chamber.

The chamber may have various configurations provided that at least part of it is adapted to define a substantially circular pathway preferably in the horizontal plane.

The reaction chamber may be of a cylindrical design, the path being defined by the circumference of the cylinder. In a preferred construction of this arrangement, the lower end of the cylinder is tapered to form an inverted conical section.

It is preferred that the inlet means be provided in the region of the circular portions of the path, preferably such that the reactants enter tangentially with respect to the circular path. More especially the inlets are provided at points of the circular path where reactants are moving around the path at the maximum angular velocity.

Since the path is circular, at least in part, centrifugal forces acting on the solids particles have a tendency to induce some gradient of particle concentration, with the higher concentration exiting towards the outer periphery of the circular pathway. Similarly, heavier particles will tend to reside in the lower regions of the path. Thus off-takes can be provided at varying points to provide accurate control of the average residence time and solids to gas ratios of reactants in the reaction chamber.

Although reactors in accordance with the present invention may be used alone for effecting hydrogenating reactions, they can be associated with other reactors, having different configurations, to effect hydrogenation in a multistage process. For example, a hydrogen reaction may be effected according to the technique described in European Patent Publication No. 0095237 and the product gas, char, unreacted hydrogenating gas and coal particles fed directly into apparatus according to the present invention, and a further reaction effected.

Alternatively, a hydrogenation reaction may be effected in apparatus according to the present invention and the gaseous product removed. Thereafter the solids are employed as the solids feedstock for a fluidized bed hydrogenation utilising fresh hydrogenating gas as both reactant and fluidizing agent. Both gaseous and solids products may be recycled externally between reactors.

The invention will be illustrated by reference to the accompanying drawings in which :

Figure 1 is a schematic representation of apparatus of the invention illustrating an elevational view, and

Figures 2 to 4 are schematic representations of the apparatus of Figure 1 in combination with other forms of hydrogenation.

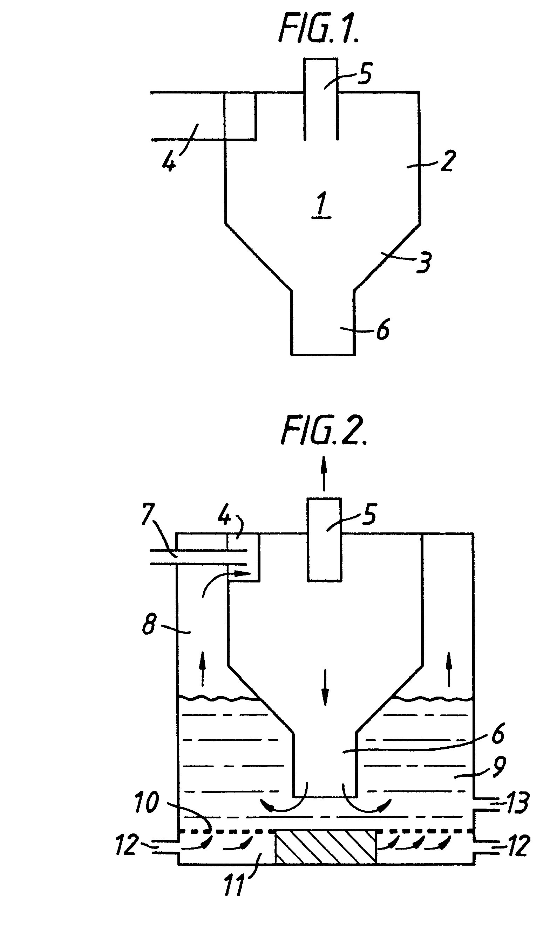

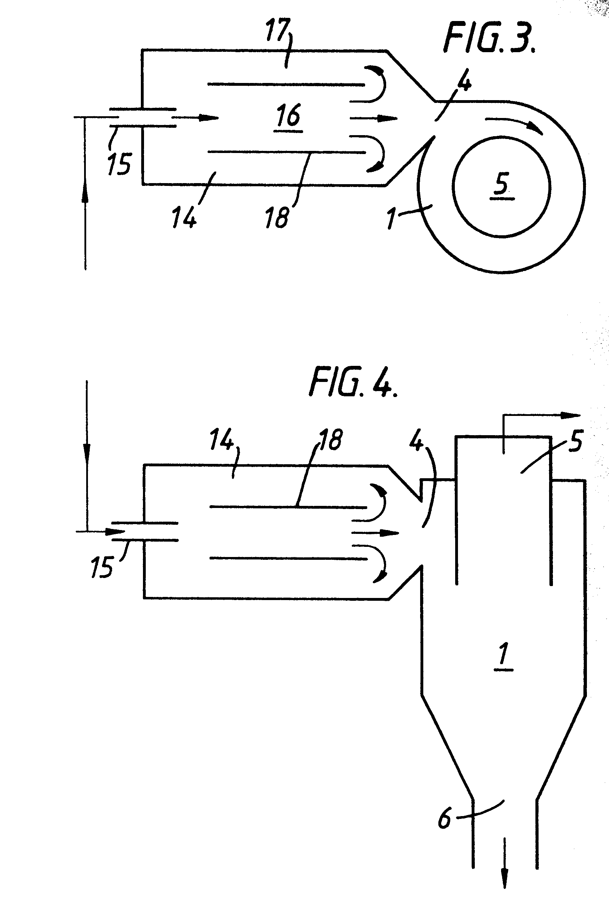

Figures 2 to 4 are elevation views whilst Figure 3 is a plan view of the apparatus illustrated in Figure 4.

Referring to the drawings, the reaction chamber 1 consists of an upper right cylindrical portion 2 and a lower inverted conical section 3. Coal particles admixed with hydrogenating gas are introduced through inlet 4. Within reactor 1, the coal particles and hydrogenating gas swirl around. Product gas and unreacted hydrogenating gas exit through gas off-take 5 whilst those coal particles and char which are settling towards the bottom of the conical section are withdrawn through off-take 6.

In the modification shown in Figure 2, coal particles in a transport gas are introduced into the inlet region 4 at the top of reactor 1 via line 7. Hydrogenating gas for the reaction is introduced into inlet 4 from the annular space 8 surrounding reactor 1. At the lower end of region 8 is a fluidized bed 9 of coal particles and char formed by these particles exiting through off-take 6. The bed 9 is supported by a perforated grid or distributor 10 through which passes the fluidising/hydrogenating gas fed in to annular chamber 11 through inlets 12. This fluidising/hydrogenating gas and product gas from the fluidised bed hydrogenation leaves the top of the bed 9 into the upper region of chamber 8 and thereafter enters reactor 1 via inlet 4.

In the embodiments shown in Figures 3 and 4, coal particles and hydrogenating gas are first reacted in a modified gas recycle hydrogenator (for example as described in our European Patent Publication No. 0095237) prior to reaction in apparatus according to the present invention.

Thus, coal and hydrogenating gas, in admixture are fed into the axial region of a cylindrical hydrogenation vessel 14 through inlet 15. Vessel 14 is divided into an inner cylindrical riser zone 16 and an outer annular downcomer zone 17 by a cylindrical way 18 which has a shorter internal length than the walls of vessel 14. Reactants enter the axial core region and pass along the riser 16. Within the riser some reaction takes place. Hydrogenation products, and unreacted reactants then either pass into the inlet region 4 of reactor 1 and thence into the reactor itself or cross over the end of walls 18 and return along downcomer 17 for recirculation, together with fresh reactants along riser 16.

Gaseous reaction products and unreacted hydrogenating gas from both

0216569

reactors 1 and 14 leave via off-take 5 whilst solids are taken from the system through off-take 6.

CLAIMS                                                                 **0216569**

1.    Apparatus for carrying out gas-solid phase reactions including a reaction chamber (1) arranged and adapted to define an endless pathway, inlet means (4) for introducing at least one gaseous reactant and at least one solid particulate reactant into said chamber and off-take means (6) for removing reaction products from said chamber, characterised in that at least a portion of the pathway is circular with respect to the direction of movement of the reactancts.

2.    Apparatus as claimed in Claim 1 wherein said inlet means are located tangentially with respect to said circular portion of said path.

3.    Apparatus as claimed in Claim 1 or Claim 2 in which said path is substantially horizontal.

4.    Apparatus as claimed in claim 2 or claim 3 wherein said chamber is arranged and adapted to define a cylinder having an inverted conical portion at its lower end, said path being defined by the circumference of the cylinder.

5.    Apparatus as claimed in claim 4 wherein off-take means are provided axially at each end of said chamber.

6.    Apparatus as claimed in either claim 4 or claim 5 wherein said inlet means are located in the upper peripheral region of said

cylinder.

7. Apparatus as claimed in any one of the preceding claims wherein said inlet means includes a reaction vessel wherein a portion of the reactants can be reacted prior to introduction into said reaction chamber.

8. Apparatus as claimed in claim 7 wherein said reaction vessel is an entrained flow hydrogenator.

9. Apparatus as claimed in claim 8 wherein said reaction vessel is arranged and adapted to define an endless path and to cause a proportion of said reactants to recirculate along said path.

10. Apparatus as claimed in claim 7 wherein said reaction vessel is a fluidised bed hydrogenator.

11. Apparatus as claimed in claim 10 wherein at least one inlet means for said reaction vessel is in direct communication with off-take means for removing solids from said reaction chamber.

12. Apparatus as claimed in claim 10 or claim 11 wherein at least one gaseous reactant is employed as a fluidising agent for said fluidised bed reaction.

0216569

1/2

FIG.1.

FIG.2.

0216569

**FIG.3.**

17
15
16
14
18
4
1
5

**FIG. 4.**

14
18
4
5
15
1
6